# EUROPEAN PATENT APPLICATION

(11) **EP 2 402 060 A1**
(43) Date of publication of application: **04.01.2012**
(21) Application number: 10746089.1
(22) Date of filing: 10.02.2010
(51) Int. Cl.: A62C 13/76, B65D 81/30

(54) **FIRE EXTINGUISHING AGENT STORAGE VESSEL AND FIRE EXTINGUISHER**

(30) Priority: 24.02.2009 JP 2009040181; 13.10.2009 JP 2009235974
(71) Applicant: Hatsuta Seisakusho Co., Ltd., Osaka 573-1132 (JP)
(72) Inventor: TSUCHIDA, Hideo, Hirakata-shi Osaka 573-1132 (JP)
(74) Representative: Nicholls, Michael John
(86) International application number: PCT/JP2010/051924
(87) International publication number: WO 2010/098208

(57) **Abstract**

One disclosed fire extinguisher cylinder (10) is the fire extinguisher cylinder (10) of a fire extinguisher (100) and is seamlessly molded, except for an aperture, using a pigmented resin. In addition, gas permeability when the aforementioned aperture has been sealed is not more than 3.22 × 10⁻⁷ ((Pa · m³ · mm)/(cm² · s · MPa)). Provided thereby are a fire extinguisher cylinder that is lightweight and gas-impermeable, i.e., which features high pressure storage characteristics, and a fire extinguisher that is equipped with the fire extinguisher cylinder.

## Description

### TECHNICAL FIELD

The present invention relates to a fire extinguisher cylinder made of a resin and a fire extinguisher including the fire extinguisher cylinder.

### BACKGROUND ART

Fire extinguisher cylinders used in fire extinguishers are conventionally made of metals such as iron, a stainless steel, and aluminum. Among these, iron fire extinguisher cylinders are tough and less likely to be broken, as well as can be manufactured at low cost. These days, approximately 90% of the fire extinguishers in the market are thus made of iron.

There are also disclosed exemplary fire extinguishers each of which includes a fire extinguisher cylinder made of a resin. One document discloses a fire extinguisher that allows a filling pressure to be decreased as much as possible so as to be durable even with pressure resistance at a low level, which has been a drawback of the resin fire extinguisher cylinders (Patent Document 1). There is another document disclosing a fire extinguisher that is made with use of a waste thin film of polyethylene terephthalate (PET), which is adopted for soft drink or liquor (Patent Document 2). The applicant of the present invention has also disclosed an initial fire extinguisher that includes a fire extinguisher cylinder made of a resin (Patent Document 3). However, no specific proposals have been disclosed so far in response to the individual technical problems.

### PRIOR ART DOCUMENTS

### PATENT DOCUMENTS

Patent Document 1: Japanese Unexamined Utility Model Publication No. S56-160560
Patent Document 2: Japanese Unexamined Patent Publication No. H09-313634
Patent Document 3: Pamphlet of WO 2008/133176

### SUMMARY OF THE INVENTION

### PROBLEMS TO BE SOLVED BY THE INVENTION

Because the iron fire extinguisher cylinders, which are generally and widely used as described above, are quite heavy, there have arisen problems of inconvenience in portability and poor operability especially for women, children, or elders.

The above technical problems due to use of metals such as iron apparently seem to be solved by adoption of resin fire extinguisher cylinders. However, in reality, it is not easy to provide a fire extinguisher cylinder made only of a resin while keeping a light weight of the entire cylinder, because a fire extinguisher cylinder is required to be durable for at least several years (eight years, for example) as being required to the generally used metal fire extinguishers.

Further, it is not easy to form a resin fire extinguisher cylinder for a fire extinguisher of an accumulation type, for example, which needs to hold gas at a constantly high pressure for a long period of time. It is because resin fire extinguisher cylinders are generally more gas-permeable in comparison to conventional metal fire extinguisher cylinders. Therefore, a fire extinguisher cylinder for such a fire extinguisher of particularly the accumulation type is required to have the accumulation property at a level much higher than that required to a fire extinguisher cylinder for a fire extinguisher of a pressurization type.

### SOLUTIONS TO THE PROBLEMS

The present invention solves the above problems in the conventional art to significantly contribute to realization of a fire extinguisher having a light weight, the accumulation property at a high level, and less permeability to gas.

The inventor was intensively involved in development from various perspectives of a resin fire extinguisher cylinder that can replace the currently used metal fire extinguisher cylinder. The inventor finally succeeded in devising a configuration of a fire extinguisher cylinder that can exploit the properties of a resin as well as redeem the drawbacks thereof, and achieved the present invention.

A fire extinguisher cylinder according to the present invention is used in a fire extinguisher. This fire extinguisher cylinder is shaped with use of a resin including a pigment so as to be provided with no joint except at an opening, and has a gas permeability of not more than 3.22 × 10⁻⁷ ((Pa•m³•mm)/(cm²•s•MPa)) in a case where the opening is sealed.

This fire extinguisher cylinder is shaped with use of a resin and thus can be remarkably reduced in weight in comparison to a conventionally existing metal fire extinguisher cylinder. Further, reduction in weight is realized to a fire extinguisher that uses this fire extinguisher cylinder. Thus, the fire extinguisher is easy to use in case of fire for anyone irrespective of age or gender, thereby to provide a preferable condition for fire fighting. Such realization of reduction in weight of the fire extinguisher also leads to reduction in volume of carbon dioxide that is exhausted from a carrier vehicle during transportation, thereby significantly contributing to preservation of the global environment. Moreover, this fire extinguisher cylinder can be filled with sufficient pressurized gas used for jetting a fire extinguishant as well as can maintain the pressurized state.
Furthermore, this fire extinguisher cylinder is shaped with use of a resin including a pigment so as to improve visual quality into a state where the fire extinguishant contained therein is moderately visible. This fire extinguisher cylinder may also contribute to improvement in gas barrier property, which is important to a fire extinguisher.

A fire extinguisher according to the present invention includes the fire extinguisher cylinder described above.

This fire extinguisher includes the fire extinguisher cylinder described above, which is shaped with use of a resin, and thus can be remarkably reduced in weight in comparison to a case of using a conventionally existing metal fire extinguisher cylinder. Further, because such reduction in weight is realized to the fire extinguisher adopting this fire extinguisher cylinder, the fire extinguisher is easy to use in case of fire for anyone irrespective of age or gender, thereby to provide a preferable condition for fire fighting. Such realization of reduction in weight of the fire extinguisher also leads to reduction in volume of carbon dioxide that is exhausted from a carrier vehicle during transportation, thereby significantly contributing to preservation of the global environment. Moreover, this fire extinguisher cylinder can be filled with sufficient pressurized gas used for jetting a fire extinguishant as well as can maintain the pressurized state. Furthermore, this fire extinguisher cylinder in the fire extinguisher is shaped with use of a resin including a pigment so as to improve visual quality into a state where the fire extinguishant contained therein is moderately visible. This fire extinguisher cylinder may also contribute to improvement in gas barrier property, which is important to a fire extinguisher.

### EFFECTS OF THE INVENTION

A fire extinguisher cylinder or a fire extinguisher according to the present invention achieves reduction in weight as well as maintains strength at a high level. Further, the fire extinguisher cylinder or the fire extinguisher does not cause deterioration in visual quality of the place around the fire extinguisher installed, and exerts a gas barrier property at a high level.

### BRIEF DESCRIPTION OF THE DRAWINGS

Fig. 1 is an external view showing an entire fire extinguisher according to an embodiment of the present invention.
Fig. 2 is a front view of a fire extinguisher cylinder according to an embodiment of the present invention.
Fig. 3 is a front cross-sectional view of a fire extinguisher cylinder according to an embodiment of the present invention.
Fig. 4 is a schematic view of a test device used for measuring a gas permeability of a fire extinguisher cylinder according to an embodiment of the present invention.

### DESCRIPTION OF SYMBOLS

- 10, 20: fire extinguisher cylinder
- 11: fire extinguisher storage portion
- 12: male thread portion
- 30: fire extinguisher lever handle
- 31: cap
- 32: carry handle
- 33: top lever
- 34: safety pin socket
- 35: safety pin
- 40: fire extinguisher hose
- 50: support base
- 60: fire extinguishant
- 70: siphon tube
- 80: measurement device
- 81a: upstream space
- 81b: downstream space
- 82: gas cylinder
- 83: compound gauge
- 84: measurement sample
- 85a: heater
- 85b: heater regulator
- 86a: quadrupolar gas analyzer
- 86b: recorder
- 87: turbomolecular pump
- 88: rotary pump
- 91: mouth portion
- 92: shoulder portion
- 93: body portion
- 94: bottom portion
- 100, 200: fire extinguisher

### MODES FOR CARRYING OUT THE INVENTION

Embodiments of the present invention will be described in detail with reference to the accompanying drawings. In this description, common parts are denoted by common reference symbols in all the drawings unless otherwise specified. Further, elements in these embodiments are not necessarily illustrated according to the same scale in the drawings. Some of the symbols may not be indicated in the drawings for the purpose of simplification in appearance thereof.

### First Embodiment

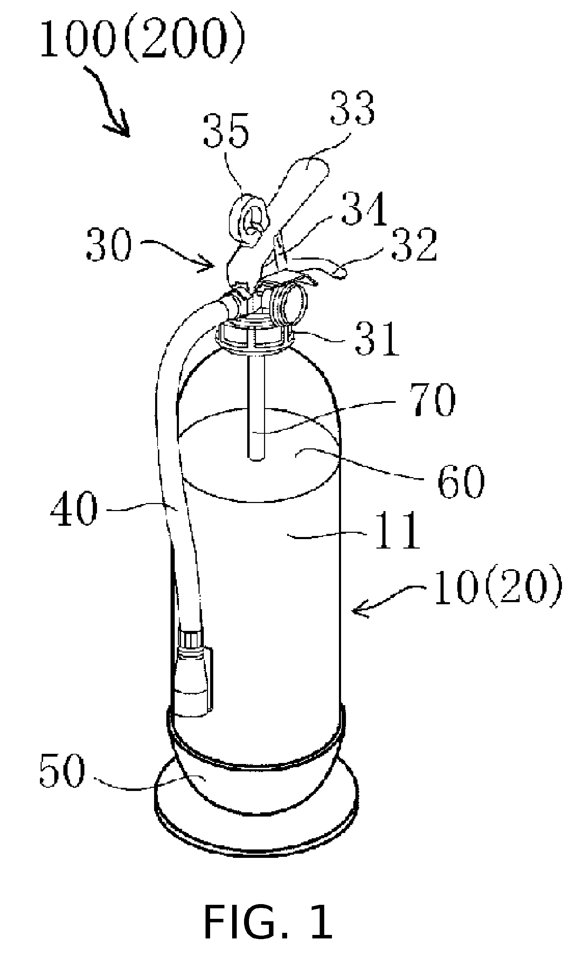

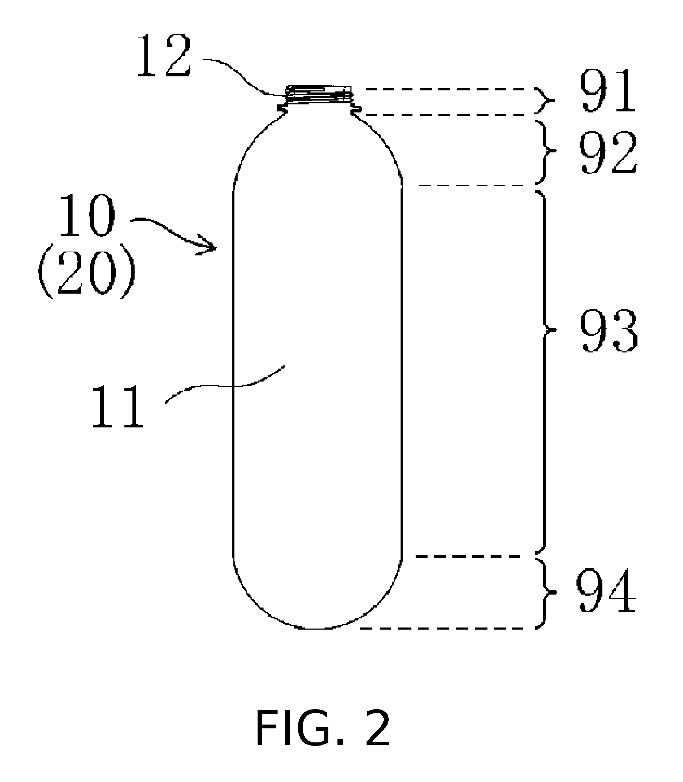

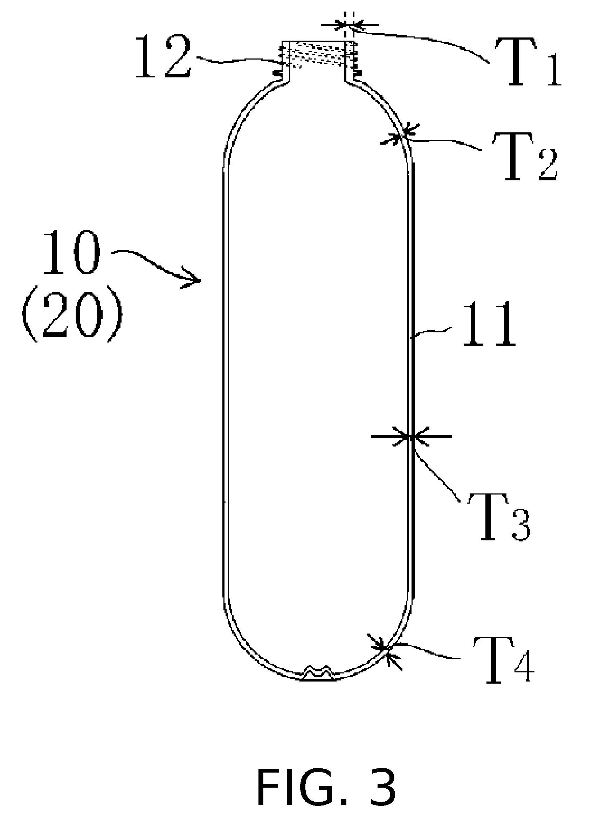

Fig. 1 is an external view of an entire fire extinguisher 100 according to the present embodiment. Fig. 2 is a front view of a fire extinguisher cylinder 10, and Fig. 3 is a front cross-sectional view of the fire extinguisher cylinder 10. In Fig. 2, there are drawn dashed lines and solid lines for convenience in the illustration of portions of the fire extinguisher cylinder. Further, in Fig. 3, drawn for convenience are arrows indicative of the thickness of the fire extinguisher cylinder 10 and dashed lines extending the cross-sectional shape of a mouth portion 91 for indication of the thickness of the mouth portion 91.

As shown in Fig. 1, the fire extinguisher 100 according to the present embodiment includes the fire extinguisher cylinder 10 containing a fire extinguishant 60 (such as a powdery fire extinguishant), a support base 50 fitted with a bottom portion of the fire extinguisher cylinder 10 to hold the fire extinguishant 60, a fire extinguisher lever handle 30 provided above the fire extinguisher cylinder 10, a siphon tube 70 for guiding the fire extinguishant 60 stored in the fire extinguisher cylinder 10 to the fire extinguisher lever handle 30, and a fire extinguisher hose 40 to be connected communicably with the siphon tube 70 when the fire extinguisher lever handle 30 is operated.

The fire extinguisher lever handle 30 is provided with a cap 31, a carry handle 32, a top lever 33, a safety pin socket 34, and a safety pin 35. In the present embodiment, the safety pin 35 is engaged with the safety pin socket 34 to fix the top lever 33 unrotatably with respect to the carry handle 32. When the safety pin 35 is disengaged from the safety pin socket 34, the top lever 33 is made rotatable with respect to the carry handle 32.

Moreover, the fire extinguisher cylinder 10 according to the present embodiment is configured by a fire extinguisher storage portion 11 and a male thread portion 12 that is provided around an opening located at an upper portion of the fire extinguisher storage portion 11. When the fire extinguisher lever handle 30 is threadably mounted on the male thread portion 12, the fire extinguisher cylinder 10 and the fire extinguisher lever handle 30 are fixed to each other. The fixing manner between the fire extinguisher cylinder 10 and the fire extinguisher lever handle 30 is not limited to such threadable mounting, but it is possible to alternatively adopt any other known joining manner.

The fire extinguisher 100 according to the present embodiment includes the fire extinguisher cylinder 10 made of polyethylene naphthalate (PEN) that includes a red pigment of the perinone series. More specifically, the fire extinguisher cylinder 10 according to the present embodiment is made of polyethylene naphthalate (PEN) blended with a masterbatch (including the pigment blended with PEN). The masterbatch in the present embodiment is prepared by blending 1.3 parts of the perinone series red pigment with 100 parts of polyethylene naphthalate (PEN). The masterbatch described above is blended in the proportion of 5% to 30% with polyethylene naphthalate (PEN). As shown in Figs. 1 to 3, the fire extinguisher cylinder 10 according to the present embodiment is provided with no joint except at the opening, unlike a metal fire extinguisher cylinder. There is also prepared a fire extinguisher cylinder in which the above masterbatch is not at all included for use in a comparative example.

The fire extinguisher cylinder 10 according to the present embodiment is provided with the mouth portion 91 having a thickness (T₁) of 2 mm to 5 mm, and a curved shoulder portion 92 having a thickness (T₂) of 1.2 mm to 12 mm. There is also provided a cylindrical body portion 93 having a thickness (T₃) of 1.2 mm to 1.7 mm, and a curved bottom portion 94 having a thickness (T₄) of 1.2 mm to 12 mm. Further, the fire extinguisher cylinder 10 according to the present embodiment has a whole light transmittance of approximately 50%.

The fire extinguisher cylinder 10 according to the present embodiment preferably has a whole light transmittance of 0% to 90%, and more preferably of 5% to 75%. In a case where the whole light transmittance exceeds 75% in the fire extinguisher cylinder 10 of the present embodiment, the fire extinguishant contained in the cylinder and adhering to the wall surface thereof looks like dirt on the fire extinguisher, thereby causing deterioration in visual quality of the place around the fire extinguisher 100 installed. On the other hand, in a case where the whole light transmittance thereof is less than 5%, the residual quantity of the fire extinguishant is hard to be checked in emergency, which deteriorates utility of the fire extinguisher. Accordingly, appropriate transparency kept in the above range achieves harmonization between the utility and the visual quality of the outer appearance. It is further preferable that the fire extinguisher cylinder has a whole light transmittance of 20% to 70%. The whole light transmittance in this range realizes better harmonization with the visual quality around the location of installation.

In the fire extinguisher cylinder 10 according to the present embodiment, the thickness of the body portion 93 is preferably from 0.9 mm to 5 mm. In a case where the thickness of the resin is less than 0.9 mm, it may not be possible to achieve strength at a level (such as approximately 2.6 MPa) required to a fire extinguisher cylinder. On the other hand, in a case where the thickness thereof is more than 5 mm, such a cylinder is not economically preferable and may not be possible to achieve the transparency enough to visually recognize the fire extinguishant contained therein. In view of the above, the thickness of the body portion 93 is more preferably from 0.9 mm to 3 mm.

It is found out that the fire extinguisher 100 according to the present embodiment is successfully reduced in weight to approximately 70% as a whole in comparison to the case of adopting a conventional iron fire extinguisher cylinder. Such a fire extinguisher significantly reduced in weight is easy to use in case of fire for anyone irrespective of age or gender, thereby successfully providing a preferable condition for fire fighting.

Described next is a method for manufacturing the fire extinguisher cylinder 10 according to the present embodiment. The fire extinguisher cylinder 10 that is made of polyethylene naphthalate blended with the masterbatch (including the pigment blended with polyethylene naphthalate (PEN)) can be manufactured by adopting one of the conventionally known resin molding methods such as stretch blow molding and melting molding. Among these, stretch blow molding is preferably adopted because the resultant cylinder is provided with no joint except at the opening, is well shaped, and has an appropriate thickness.

In the present embodiment, firstly, polyethylene naphthalate (PEN) blended with the masterbatch, which is the material for the fire extinguisher cylinder 10, is melted and this resin is injected or extruded into an injection molding die to obtain a preformed article (hereinafter, referred to as a preform) having a thickness of approximately 15 mm. The preform is then stretched so as to obtain a product more than 12 by multiplying a stretch factor in scalar quantity at the body portion 93 in the circumferential direction by a stretch factor in scalar quantity in the direction perpendicular to the circumferential direction. In this manner, the fire extinguisher cylinder 10 is formed to have the side surface of a thickness of 0.9 mm to 5 mm.

As described above, in the case where the fire extinguisher cylinder 10 is formed by stretch blow molding, the strength or the pressure resistance is enhanced and also achieved may be the transparency expressed as being transparent or translucent. Further, the fire extinguisher cylinder made of a transparent or translucent resin enables the inside thereof to be visible, which is impossible with a conventionally existing metal fire extinguisher cylinder. In other words, the fire extinguishant stored in the fire extinguisher cylinder can be visually recognized moderately. As a result, an ordinary user, an inspector, or an administrator can directly observe the residual quantity of the stored fire extinguishant and the state of storage thereof. Therefore, even such an ordinary user is capable of determining whether or not the fire extinguishant in the installed fire extinguisher is in a proper state.

The preform of the fire extinguisher cylinder 10 in the above embodiment preferably has a whole light transmittance of 5% to 75%. Further, the preform of the fire extinguisher cylinder 10 in the present embodiment preferably has a thickness of 4 mm to 30 mm.

In a case where the whole light transmittance exceeds 75% in the preform of the fire extinguisher cylinder 10 according to the present embodiment, the fire extinguishant stored in the fire extinguisher cylinder 10 having been processed by stretch blow molding and adhering to the wall surface thereof looks like dirt on the fire extinguisher, which will cause deterioration in visual quality of the place around the fire extinguisher 100 installed. On the other hand, in a case where the whole light transmittance of the preform described above is less than 5%, the residual quantity of the fire extinguishant stored in the fire extinguisher cylinder 10 having been processed by stretch blow molding is hard to be checked in emergency, which deteriorates the utility of the fire extinguisher. Accordingly, also in the preform of the fire extinguisher cylinder 10, the transparency kept in the above range achieves harmonization between the utility and the visual quality of the outer appearance of the fire extinguisher cylinder 10 having been processed by stretch blow molding.

Even in a case where the above preform is made too thick, there arises a problem that the transparency is deteriorated of the fire extinguisher cylinder 10 having been processed by stretch blow molding. Further, in order to certainly achieve sufficient pressure resistance of the fire extinguisher cylinder 10 finally obtained, it is preferable that the body portion 93 in particular has a thickness of 0.9 mm to 5 mm. Accordingly, the preform of the fire extinguisher cylinder 10 in the present embodiment preferably has a thickness of 4 mm to 30 mm. Moreover, preferably obtained is a product of 6 to 13.7, and more preferably of 10 to 13, by multiplying the stretch factor in scalar quantity at the body portion 93 in the circumferential direction by the stretch factor in scalar quantity in the direction perpendicular to the circumferential direction.

Then measurements were made on the gas barrier property of the fire extinguisher cylinder 10 according to the present embodiment.

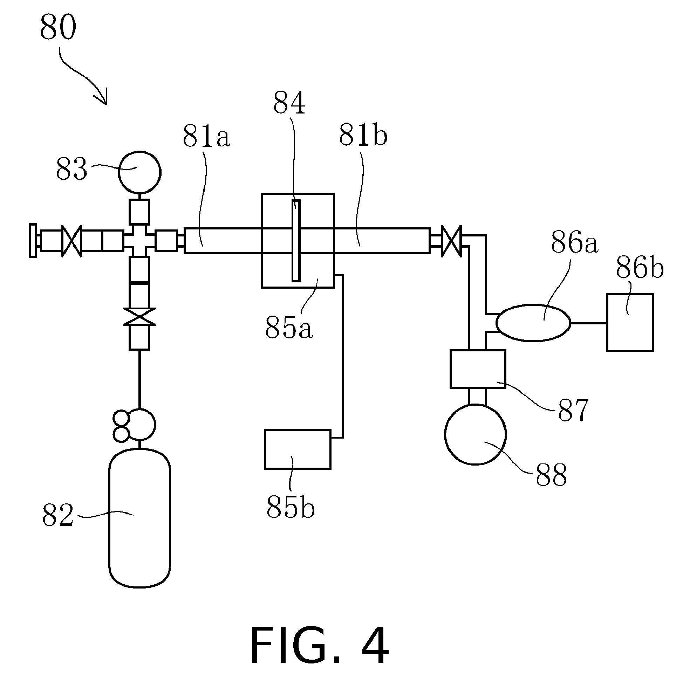

Table 1 indicates measurement results of the gas barrier property of the fire extinguisher cylinder 10 in the fire extinguisher 100, which is manufactured in the present embodiment. The measurements in the present embodiment were made with use of a measurement device 80, which is shown in Fig. 4 and is used for measuring a gas permeability. As illustrated in Fig. 4, there is disposed a gas cylinder 82 for measurement gas in an upstream space 81a with respect to a measurement sample 84 (namely, a test piece cut out of the fire extinguisher cylinder 10). The measurement gas discharged from the gas cylinder 82 is set to have a pressure equal to 0.3 MPa in the upstream space 81a. This pressure is measured by a compound gauge 83. On the other hand, a rotary pump 88 and a turbomolecular pump 87 sufficiently exhaust gas in a downstream space 81b, which is thus in a high vacuum state. Further, the measurement sample 84 is regulated to 29°C by a heater 85a that is connected to a heater regulator 85b.

The gas permeability is obtained by measuring, with use of the measurement device 80 configured as described above, the volume of the measurement gas that permeates from the upstream space 81a into the downstream space 81b within a predetermined period of time. The present embodiment adopts helium gas (He) as the measurement gas. The gas permeability is measured by a quadrupolar gas analyzer 86a that includes a recorder 86b. This analyzer adopts a gas meter named as "basic process gas monitor Qulee BGM-102R" manufactured by ULVAC (ULVAC, Inc.).

**Table 1**

| **Blending rate** | **Gas permeability** |
|---|---|
| 0% (Natural transparency) | 3.22 |
| 5% | 3.18 |
| 10% | 2.92 |
| 15% | 2.78 |
| 20% | 2.60 |
| 25% | 2.52 |
| 30% | 2.38 |

| | |
|---|---|
| **(Unit:** × 10⁻⁷ Pa•m³•mm/cm²•s•MPa) | |

As indicated in Table 1, the gas permeability property was deteriorated as there was increased the blending rate of the masterbatch (including the (perinone series red) pigment blended with PEN) included in the above fire extinguisher cylinder 10 made of polyethylene naphthalate (PEN). In other words, it was found out that increase in quantity of the pigment included in the fire extinguisher cylinder 10 leads to improvement in so-called gas barrier property. As a result, in the fire extinguisher 100 according to the present embodiment, increase in blending rate of the masterbatch including the perinone series red pigment enabled decrease in permeability of the above measurement gas to as low as 2.38 × 10⁻⁷ ((Pa•m³•mm)/(cm²•s•MPa), although failing to completely eliminate to zero. It is noted that the blending rate of 30% or less may keep visibility for the content (fire extinguishant), which is an advantageous feature of a resin. In this manner, the masterbatch (including the (perinone series red) pigment blended with PEN) included as a pigment in the resin fire extinguisher cylinder 10 may contribute to improvement in visual quality into the state where the fire extinguishant contained therein is moderately visible as well as to improvement in gas barrier property, which is important particularly to a fire extinguisher of the accumulation type. It is noted that the present embodiment is applicable even in a case where the blending rate exceeds 30%. However, because the blending rate exceeding 30% deteriorates the translucency of the resin, it will be possibly harder to visually recognize moderately the contained fire extinguishant, which is not preferable.

As described above, in the case where the fire extinguisher cylinder is made of a resin having a gas barrier property at a high level, decrease in pressure inside the fire extinguisher cylinder can be suppressed while preserving the above advantageous features of the resin. As a result, the fire extinguisher including such a resin fire extinguisher cylinder is made applicable into practical use not only as a fire extinguisher of the pressurization type but also as a fire extinguisher of the accumulation type.

The present embodiment adopts helium gas (He) as the measurement gas. However, the measurement gas is not limited thereto. Examples of the measurement gas may include single nitrogen gas (N²), a mixture of nitrogen gas (N²) and helium gas (He), and a mixture of nitrogen gas and gas other than helium gas (such as neon (Ne) or argon (Ar)).

### Second Embodiment

A fire extinguisher 200 according to the present embodiment includes a fire extinguisher cylinder 20. The fire extinguisher cylinder 20 has the configuration same as that of the fire extinguisher 100 according to the first embodiment except the fact that the perinone series red pigment included in the fire extinguisher cylinder 10 of the first embodiment is replaced with titanium oxide (TiO₂) Accordingly, there will not be repeatedly provided the description same as that of the first embodiment.

The fire extinguisher 200 according to the present embodiment includes the fire extinguisher cylinder 20 made of polyethylene naphthalate (PEN) that includes titanium oxide (TiO₂) as a pigment. More specifically, the fire extinguisher cylinder 20 of the present embodiment is made of polyethylene naphthalate (PEN) that is blended with a masterbatch (including the pigment blended with PEN). The masterbatch in the present embodiment is prepared by blending 0.13 parts of titanium oxide (TiO₂) with 100 parts of polyethylene naphthalate (PEN). The masterbatch described above is blended in the proportion of 5% to 30% with polyethylene naphthalate (PEN). As shown in Figs. 1 to 3, the fire extinguisher cylinder 20 according to the present embodiment is provided with no joint except at an opening, unlike a metal fire extinguisher cylinder. There is also prepared a fire extinguisher cylinder in which the above masterbatch is not at all included for use in a comparative example.

Table 2 indicates measurement results of the gas barrier property of the fire extinguisher cylinder 20 in the fire extinguisher 200, which is manufactured in the present embodiment. The permeability was measured by adopting the method same as that for measuring the permeability of the measurement gas in the fire extinguisher cylinder 10 described earlier.

**Table 2**

| **Blending rate** | **Gas permeability** |
|---|---|
| 0% (Natural transparency) | 3.22 |
| 5% | 3.20 |
| 10% | 3.17 |
| 15% | 3.15 |
| 20% | 3.12 |
| 25% | 3.10 |
| 30% | 3.09 |

| | |
|---|---|
| **(Unit:** × 10⁻⁷Pa•m³•mm/cm²•s•MPa) | |

As indicated in Table 2, the gas permeability was deteriorated as there was increased the blending rate of the masterbatch (including the pigment (titanium oxide) blended with PEN) included in the fire extinguisher cylinder 20 made of polyethylene naphthalate (PEN) in the above embodiment. In other words, it was found out that increase in quantity of the pigment included in the fire extinguisher cylinder 20 leads to improvement in so-called gas barrier property. As a result, in the fire extinguisher 200 according to the present embodiment, increase in blending rate of the masterbatch including titanium oxide enabled decrease in permeability of the above measurement gas to as low as 3.09 × 10⁻⁷ ((Pa**•**m³**•**mm)/(cm²**•**s**•**MPa), although failing to completely eliminate to zero. It is noted that the blending rate of 30% or less may keep visibility for the content (fire extinguishant), which is an advantageous feature of a resin. In this manner, the masterbatch (including the pigment (titanium oxide) blended with PEN) included as a pigment in the resin fire extinguisher cylinder 20 may contribute to improvement in visual quality into the state where the fire extinguishant contained therein is moderately visible as well as to improvement in gas barrier property, which is important particularly to a fire extinguisher of the accumulation type. It is noted that the present embodiment is applicable even in a case where the blending rate exceeds 30%. However, because the blending rate exceeding 30% deteriorates the translucency of the resin, it will be possibly harder to visually recognize moderately the contained fire extinguishant, which is not preferable.

As described above, in the case where the fire extinguisher cylinder is made of a resin having a gas barrier property at a high level, decrease in pressure inside the fire extinguisher cylinder can be suppressed while preserving the above advantageous features of the resin. As a result, the fire extinguisher including such a resin fire extinguisher cylinder is made applicable into practical use not only as a fire extinguisher of the pressurization type but also as a fire extinguisher of the accumulation type. However, in order to enhance the gas barrier property, the perinone series red pigment is more preferably adopted rather than use of titanium oxide as a pigment. In the case where titanium oxide is adopted as a pigment, there is obtained a fire extinguisher cylinder in white, which is a rare color for a fire extinguisher. Therefore, it is still one preferable aspect to adopt titanium oxide as a pigment in view of the fact that it easily draws attention of users or inspectors.

### Other embodiments

There is no particular limitation to the type of the fire extinguishant that is stored in the fire extinguisher cylinder of the fire extinguisher according to each of the embodiments described above. It is possible to adopt any known fire extinguishant as long as it does not affect the resin forming the fire extinguisher cylinder. For example, a powdery fire extinguishant can be used in the fire extinguisher of the present invention. Further, it is possible to appropriately adopt any conventionally proposed one of the methods of filling the fire extinguishant as well as the materials, shapes, and the like of the components such as the hose and the nozzle.

Among the above embodiments, in each of the first and second embodiments, the fire extinguisher cylinder is shaped with use of a resin blended with a masterbatch. In these cases, the fire extinguisher cylinder may be provided on the outer peripheral surface with a known coating film or a film including a known pigment. For example, there is widely and generally used a film that is provided with specifications about the manufacturer of the fire extinguisher and performance thereof, or decoration, adoption of which will not deteriorate the effects of the present invention.

Further, the resin forming the fire extinguisher cylinder may be appropriately blended with any one of known additives such as a light stabilizer, an ultraviolet absorber, and an antioxidant, for the purposes of preventing discoloration and improving weather resistance, as long as such additives do not deteriorate the effects of the respective embodiments described above.

As having been described, also included in the claims of the present invention are modifications that are made within the scope of the present invention as well as other combinations of the respective embodiments.

### INDUSTRIAL APPLICABILITY

A fire extinguisher according to the present invention adopts a resin fire extinguisher cylinder having an accumulation property at a high level as well as a gas barrier property at a high level. Therefore, such a fire extinguisher is significantly useful in the industry of fire extinguishers.

## Claims

1. A fire extinguisher cylinder for use in a fire extinguisher, wherein
the fire extinguisher cylinder is shaped with use of a resin including a pigment so as to be provided with no joint except at an opening, and has a gas permeability of not more than 3.22 × 10⁻⁷ (Pa**•**m³**•**mm)/(cm²**•**s**•**MPa) in a case where the opening is sealed.

2. The fire extinguisher cylinder according to claim 1, wherein
the gas permeability is not more than 3.08 × 10⁻⁷ (Pa**•**m³**•**mm)/(cm²**•**s**•**MPa).

3. The fire extinguisher cylinder according to claim 1 or 2, wherein
the pigment is a perinone series red pigment.

4. The fire extinguisher cylinder according to claim 1 or 2, wherein
the resin is polyethylene naphthalate.

5. The fire extinguisher cylinder according to claim 1 or 2, wherein
the gas is nitrogen or includes nitrogen.

6. The fire extinguisher cylinder according to claim 1 or 2, wherein
the pigment is a perinone series red pigment,
the resin is polyethylene naphthalate, and
the gas is nitrogen or includes nitrogen.

7. A fire extinguisher comprising the fire extinguisher cylinder of claim 1 or 2.

8. A fire extinguisher comprising the fire extinguisher cylinder of claim 3.

9. A fire extinguisher comprising the fire extinguisher cylinder of claim 4.

10. A fire extinguisher comprising the fire extinguisher cylinder of claim 5.

11. A fire extinguisher comprising the fire extinguisher cylinder of claim 6.
